# EUROPÄISCHE PATENTSCHRIFT

(11) **EP 0 632 617 B1**
(45) Veröffentlichungstag und Bekanntmachung des Hinweises auf die Patenterteilung: **10.04.2002**
(21) Anmeldenummer: 94109811.3
(22) Anmeldetag: 24.06.1994
(51) Int. Cl.: H04L 12/24

(54) **Verfahren und Einrichtung zur Unterstützung des Netzwerkmanagements**
Method and apparatus to support networkmanagement
Procédé et appareil pour le support du management de réseau

(30) Priorität: 29.06.1993 DE 4321458
(43) Veröffentlichungstag der Anmeldung: 04.01.1995
(73) Patentinhaber: ALCATEL, 75008 Paris (FR)
(72) Erfinder: Jabs, Arno, D-71636 Ludwigsburg (DE)
(74) Vertreter: Knecht, Ulrich Karl, Dipl.-Ing.

(56) Entgegenhaltungen:
- EP-A- 0 502 423
- WU S F ET AL: "NETWORK MANAGEMENT WITH CONSISTENTLY MANAGED OBJECTS" COMMUNICATIONS: CONNECTING THE FUTURE, SAN DIEGO, DEC. 2- 5, 1990, Bd. 1, 2. Dezember 1990 (1990-12-02), Seiten 182-187, XP000218721 INSTITUTE OF ELECTRICAL AND ELECTRONICS ENGINEERS ISBN: 0-87942-632-2
- DUPUY A: "NETMATE: A NETWORK MANAGEMENT ENVIRONMENT" IEEE NETWORK: THE MAGAZINE OF COMPUTER COMMUNICATIONS, Bd. 5, Nr. 2, 1. März 1991 (1991-03-01), Seiten 35-40, 43, XP000207780 ISSN: 0890-8044
- LEIGH B I: "BRIDGING THE NETWORK GENERATION GAP" COMPUTER COMMUNICATIONS, Bd. 14, Nr. 2, 1. März 1991 (1991-03-01), Seiten 113-120, XP000176188 ISSN: 0140-3664
- DOHMEN A ET AL: "NETZMANAGER MIT MASSANZUG. \SIEMENS-MANAGEMENTSYSTEM FUER LAN WAECHST MIT NETZGROESSE UND KUNDENANFORDERUNGEN" TELCOM REPORT, Bd. 16, Nr. 3, 1. Mai 1993 (1993-05-01), Seiten 166-169, XP000385464 ISSN: 0344-4724

## Beschreibung

Die Erfindung betrifft ein Verfahren zur Unterstützung des Netzwerkmanagements nach dem Oberbegriff von Anspruch 1 sowie eine Netzwerkmanagementeinrichtung nach dem Oberbegriff von Anspruch 8.

Die Aufgabe des Netzwerkmanagements besteht darin, ein Kommunikationsnetz zu verwalten. Damit zählt z.B. das Einrichten und Modifizieren der Netztopologie (Konfigurationsmanagement), die Fehlererkennung, -behandlung und -korrektur (Fehlermanagement), die Verkehrsüberwachung und Verkehrsmessung (Verkehrsleistungs-Management) und die Gebührenerfassung (Gebühren-Management) zu ihrem Aufgabenbereich. Ein Netzbetreiber erfüllt diese Aufgabe mittels einer Netzwerkmanagementeinrichtung, die durchaus aus mehreren hierarchisch gegliederten Teilnetzwerkmanagementeinrichtungen bestehen kann. Es könnten auch mehrere Teilnetzwerkmanagementeinrichtungen nebeneinander bestehen, die den Netzbetreiber jeweils bei einer bestimmten Netzwerkmanagementaufgabe unterstützen.

Die Netzwerkmanagementeinrichtung stellt dem Netzbetreiber Steuer-, Kontroll- und Koordinationsfunktionen zur Verfügung und ermöglicht es ihm, von einer zentralen Stelle aus auf alle Netzkomponenten zugreifen zu können und von dort aus alle relevanten Informationen über sein Kommunikationsnetz zu erhalten. Solch eine Netzwerkmanagementeinrichtung wird auch als autonom bezeichnet, da es sich nicht um eine von mehreren Teilnetzwerkmanagementeinrichtungen eines Netzbetreibers handelt. In diesem Zusammenhang ist auch der Begriff autonomes Kommunikationsnetz zu verstehen. Es handelt sich um die Summe aller Teilkommunikationsnetze, die von einem Netzbetreiber verwaltet werden.

In der Produktbeschreibung 'HP Open View Network Management Server' der Firma Hewlett-Packard, die unter der Bestellnummer 5952-1412 erhältlich und 1989 erschienen ist, wird solch eine gattungsgemäße Netzwerkmanagementeinrichtung beschrieben. Diese Einrichtung ermöglicht es dem Netzbetreiber, ein integriertes Sprach- und Datennetz zentral zu verwalten. Netzkomponenten unterschiedlicher Kommunikationsebenen, wie z.B. die Multiplexer eines Übertragungsnetzes und die Koppelelemente (z.B. Router) eines darüberliegenden Datennetzes können ebenso Bestandteile dieses Kommunikationsnetzes sein wie Netzkomponenten unterschiedlicher Hersteller, die unterschiedliche Managementprotokolle (z.B. die Industriestandards CMCT oder SNMP für TCP/IP-Netze) unterstützen.

Bei solchen Netzwerkmanagementeinrichtungen werden all diese unterschiedlichen Netzkomponenten unter einer gemeinsamen graphischen Benutzeroberfläche verwaltet. Diese Oberfläche greift auf ein Managementprogramm zu, das die eigentlichen Steuerungs- und Kontrollaufgaben übernimmt.

Mit dieser Netzwerkmanagementeinrichtung ist es möglich, daß der Netzbetreiber von einer zentralen Stelle aus alle Zustandsinformationen über sein gesamtes Kommunikationsnetz erhält und auf alle seine Netzkomponenten zugreifen kann. So werden ihm z.B. auftretende Fehler in Netzkomponenten, der Ausfall von Netzkomponenten oder sich anbahnende Überlastsituationen gemeldet. Auf diese Situationen kann er dann z.B. durch Schalten von Alternativwegen oder eine Umkonfigurierung des Kommunikationsnetzes reagieren.

Wenn jedoch z.B. Datenpakete in andere, mit dem Kommunikationsnetz des Netzbetreibers verkoppelte Kommunikationsnetze gesendet werden oder Verbindungen über solche anderen Kommunikationsnetze geschaltet werden, kann der Netzbetreiber seinen Netzwerkmanagementaufgaben oft nicht nachkommen. So erkennt er z.B., daß eine derartige Verbindung nicht aufgebaut werden kann, kann jedoch keine Alternativwege schalten, da er den Aufbau des fremden Kommunikationsnetzes nicht kennt.

In dem Artikel "Network Management with consistently managed objects communications: connecting the future", Wu S. F. et al, San Dieago, Dec. 2-5, 1990, Bd. 1, werden verschiedene Möglichkeiten erörtert, Abhängigkeiten zwischen zwei Objekten einer MIB (Management Information Base) zu handhaben.

Netzwerkmanagement beinhaltet die Manipulation verschiedenartiger Informationseinheiten, sog. Managed Objects, die zusammen den Status eines Kommunikationsnetzes darstellen. Auf diese Informationseinheiten greifen sog. Manager zu, die jeweils von einem Objekt gebildet werden (Manager Object) und jeweils spezialisierte Funktionen innerhalb des Netzwerkmanagement des Kommunikationsnetzes erbringen, beispielsweise den Routing Manager für einen bestimmten Netzknoten darstellen oder einen Performance Manager für einen bestimmten Netzbereich. Um Information über einen Teilbereich des Kommunikationsnetzes zu erhalten, generieren Manager Sensor Objekte und greifen auf eigene Sensor Objekte oder auf Sensor Objekte anderer Manager zu. Dessweiteren besteht die Möglichkeit, daß ein Manager einem anderen Manager statische Informationen übermittelt.

EP-A-0502423 beschreibt weiter ein Netzwerk von POS Terminals (POS=Point of Sales), das gemeinsam von mehreren Netzwerkmanagementsystemen verwaltet wird. Wenn eines der Netzwerkmanagementsysteme ausfällt kann durch Umkonfigurieren die Funktion des ausgefallenen Netzwerkmanagementsystems von einem anderen Netzwerkmanagementsystem übernommen werden.

In dem Artikel "Natemate: A network management environment" IEEE Networks: The Magazin of Computer communications, Bd. 5, Nr. 2, 1, 1991, Seiten 35-40, 43 von A. Dupuy wird neben einem speziellen Datenmodell eines zu verwaltenden Netzes folgende Management-Architektur zur Verwaltung eines Kommunikationsnetzes vorgeschlagen:

Die Management Architektur besteht aus Elementen, die drei Ebenen zugeordnet sind. Die erste Ebene bilden die Netzkomponenten selbst. Die zweite Ebene wird von einfachen "managing agents" (OCPs) und die dritte Ebene von "manager" gebildet. Hierbei können die Netzkomponenten über die OCPS mit mehr als einem "manager" kommunizieren. Zwei "manager", die mit derselben Netzkomponente kommunizieren, stehen hierbei in Beziehung miteinander.

In dem Artikel "Briding the network generation gap", Computer Communications, Bd. 14, Nr. 2, 1991 Seiten 113 bis 120, von B. I. Leigh wird ein hierarchisches Netzwerkmanagementsystem beschrieben. Dieses Netzwerkmanagementsystem wird von einem "Master NMC" (NMC=Network Management Center) und mehreren "Slave NMC" gebildet. Die "Slave NMC" steuern jeweils einen Teilbereich des Netzwerkmanagementsystems und der "Master NMC" steuert den globalen Netzwerkmanagementbereich.

In dem Artikel "Netzwerkmanagement mit Maßanzug", Telecom Report, Bd. 16, Nr. 3, 1993, Seiten 166 - 169 von A. Dohmen et al wird eine verteilte Bearbeitung von Netzwerkmanagementdaten beschrieben. Management-Rohdaten von den Agents werden in sog. Network Control Engines (NCE), die jeweils Teilnetzen zugeordnet sind, vorverarbeitet. Die Ergebnisse dieser Vorverarbeitung werden dann nach einer vordefinierten Prozedur oder auf Abruf an eine zentrale Managementstation weitergegeben.

Der Erfindung liegt nun die Aufgabe zugrunde, das Netzwerkmanagement bei Kommunikationsbeziehungen, die aus dem Bereich seines autonomen Kommunikationsnetzes hinausgehen, zu unterstützen.

Die Aufgabe wird gelöst durch ein Verfahren nach der Lehre des Anspruchs 1 sowie durch eine Vorrichtung nach der Lehre des Anspruchs 8.

Die Erfindung basiert auf der Erkenntnis, daß für ein effektives Netzwerkmanagement bei Kommunikationsbeziehungen, die aus dem Bereich eines autonomen Kommunikationsnetzes hinausgehen, Informationen über den Zustand fremder Kommunikationsnetze benötigt werden.

Der Grundgedanke der Erfindung besteht nun darin, daß die Netzwerkmanagementeinrichtungen untereinander Zustandsinformationen über die von ihnen verwalteten Kommunikationsnetze austauschen und diese Informationen ihrem jeweiligen Netzbetreiber sichtbar machen. Der Netzbetreiber sieht so auch die Umgebung seines Kommunikationsnetzes und kann diese Informationen für die Erfüllung seiner Netzwerkmanagementaufgaben nutzen.

Vorteilhafte Ausführungen der Erfindung sind den Unteransprüchen zu entnehmen.

Die erfindungsgemäße Anordnung hat außerdem den Vorteil, daß Kommunikationsnetze, die aus einem eigenen und einem gemieteten Teil bestehen, leichter realisiert werden können. Der Betreiber eines solchen Kommunikationsnetzes kann mittels des erfindungsgemäßen Verfahrens alle relevanten Informationen über den gemieteten Teil seines Netzes erhalten ('customer network management').

Ein weiterer Vorteil ist, daß eine Gruppe von Netzkomponenten, die ein ganz spezielles Kommunikationsprotokoll unterstützen und in mehreren autonomen Kommunikationsnetzen eingesetzt werden, zentral von einer Netzwerkmanagementeinrichtung aus überwacht werden kann.

Im folgenden wird die Erfindung anhand zweier Ausführungsbeispiele unter Zuhilfenahme der beiliegenden Zeichnungen weiter erläutert.

Fig. 1 zeigt eine symbolische Darstellung mehrerer miteinander verkoppelter Kommunikationsnetze gemäß eines ersten Ausführungsbeispiels.

Fig. 2 zeigt eine symbolische Darstellung einer erfindungsgemäßen Netzwerkmanagementeinrichtung und eines Kommunikationsnetzes gemäß des ersten Ausführungsbeispiels.

Fig. 3 zeigt eine symbolische Darstellung der Kommunikationsbeziehungen zweier erfindungsgemäßer Netzwerkmanagementeinrichtungen gemäß eines zweiten Ausführungsbeispiels.

In einem ersten Beispiel wird die Anwendung des erfindungsgemäßen Verfahrens in einer Kommunikationsumgebung mit drei autonomen Kommunikationsnetzen, die jeweils von einer gleichartigen erfindungsgemäßen Netzwerkmanagementeinrichtung verwaltet werden, aufgezeigt.

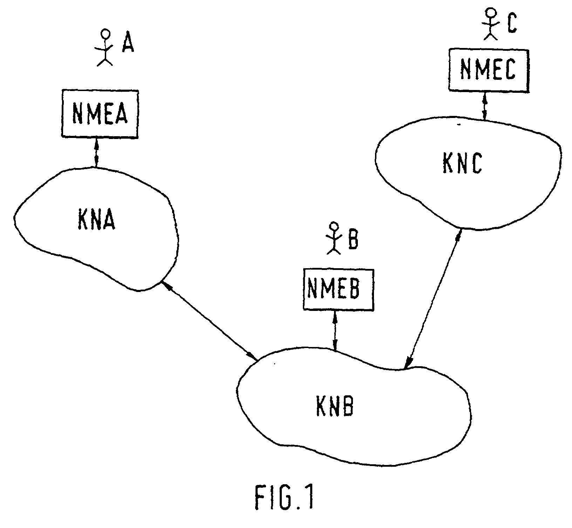

Fig. 1 zeigt drei Kommunikationsnetze KNA, KNB und KNC, drei Netzwerkmanagementeinrichtungen NMEA, NMEB und NMEC und drei Netzbetreiber A, B und C.

Die Kommunikationsnetze KN1, KN2 und KN3 sind autonome Kommunikationsnetze. Bei den Kommunikationsnetzen KNA und KNC handelt es sich um die Firmennetze zweier verschiedener Unternehmen und bei dem Kommunikationsnetz KNB um ein öffentliches Kommunikationsnetz.

Die Netzwerkmanagementeinrichtungen NMEA, NMEB und NMEC sind gleichartig aufgebaut.

Zwischen den Kommunikationsnetzen KNA und KNB sowie zwischen den Kommunikationsnetzen KNB und KNC besteht eine physikalische Nachrichtenverbindung. Damit können zwischen den Teilnehmern aller drei Kommunikationsnetze KNA, KNB und KNC Daten ausgetauscht werden.

A, B und C verwalten die Kommunikationsnetze KNA, KNB bzw. KNC mittels der Netzwerkmanagementeinrichtungen NMEA, NMEB bzw. NMEC eigenständig und autonom. Nur dem jeweiligen Netzbetreiber ist es möglich, aktiv auf sein Kommunikationsnetz einzuwirken.

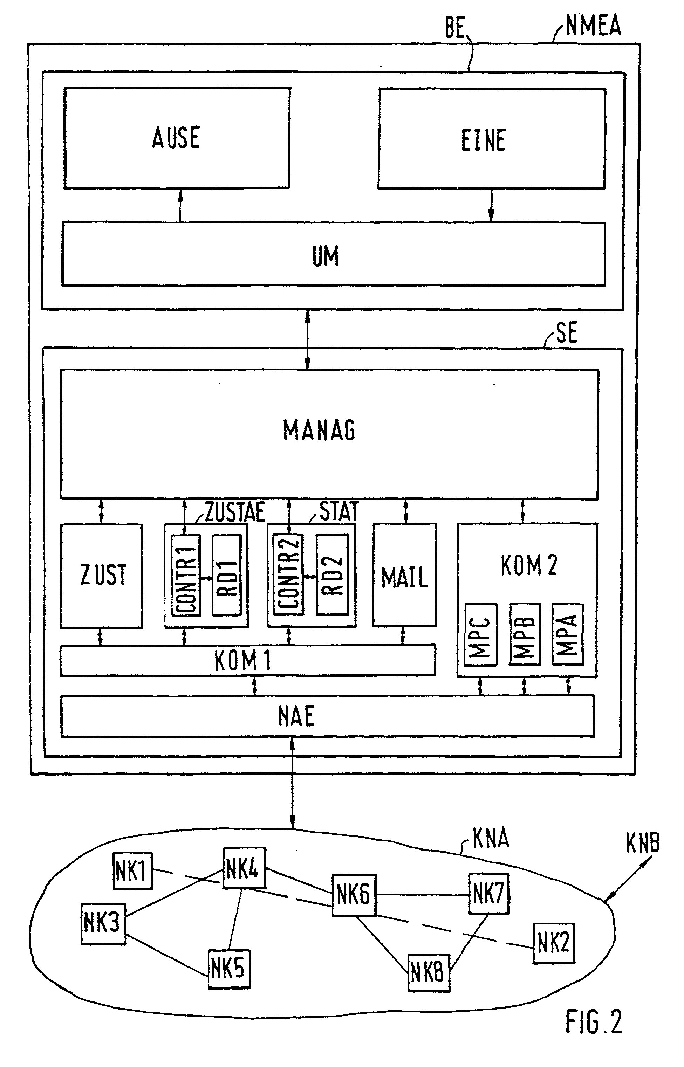

Fig. 2 zeigt eine Netzwerkmanagementeinrichtung NMEA und ein Kommunikationsnetz KNA. Das Kommunikationsnetz KNA wird von der Netzwerkmanagementeinrichtung NMEA verwaltet und ist mit dem Kommunikationsnetz KNB verkoppelt.

Das Kommunikationsnetz KNA weist die Netzkomponenten NK1 bis NK8 auf. Die Netzkomponenten NK1 und NK2 sowie die Netzkomponenten NK3 bis NK8 sind miteinander durch Kommunikationswege verbunden. Bei den Netzkomponenten NK1 und NK2 handelt es sich um Vermittlungsstellen für ein Telephon-Netz. Die Netzkomponenten NK3 bis NK8 sind Koppelelemente (z.B. Router) für ein Datennetz. Das Kommunikationsnetz KNA stellt so ein hybrides Kommunikationsnetz dar. Dies bedeutet, daß seine Netzkomponenten unterschiedliche Kommunikationsprotokolle verwenden.

Es wäre auch möglich, daß das Kommunikationsnetz KNA durch eine beliebige andere Kombination von Netzkomponenten gebildet würde. Insbesondere wäre es möglich, daß es Netzkomponenten, die verschiedenen Kommunikationsebenen angehören, enthalten würden. Es könnte sich auch um ein Kommunikationsnetz, das nicht hybrid ist, handeln.

Die Netzwerkmanagementeinrichtung NMEA weist eine Bedieneinrichtung BE und eine Steuereinrichtung SE auf.

Die Bedieneinrichtung BE bildet die Mensch-Maschine Schnittstelle und weist eine Ausgabeeinrichtung AUSE, eine Eingabeeinrichtung EINE und eine Umsetzeinrichtung UM auf.

Die Umsetzeinrichtung UM kommuniziert über die Eingabeeinrichtung EINE und über die Ausgabeeinrichtung AUSE mit dem Netzbetreiber A und stellt diesem eine graphische Benutzeroberfläche zur Verfügung. Mittels dieser kann dann der Netzbetreiber Daten aus der Steuereinrichtung SE abfragen oder ihr Befehle erteilen.

Es ist auch möglich, daß die Bedieneinrichtung über mehrere Ein- und Ausgabeeinrichtungen verfügt. So könnten mehrere Personen gleichzeitig auf die Steuereinrichtung SE zugreifen.

Die Steuereinrichtung SE weist eine Managementeinrichtung MANAG, zwei Kommunikationseinrichtungen KOM1 und KOM2, vier Protokollbearbeitungseinrichtungen ZUST, ZUSTAE, STAT und MAIL und eine Netzanschlußeinrichtung NAE auf.

Die Managementeinrichtung MANAG stellt die Schnittstelle zur Bedieneinrichtung BE bereit und greift auf die Netzkomponenten NK1 bis NK8 über die Kommunikationseinrichtung KOM2 und die Netzanschlußeinrichtung NAE zu. Sie erfaßt jede Statusänderung einer Netzkomponente (z.B. Netzkomponente fällt aus, Verbindungsweg unterbrochen) und steuert die Konfigurationsattribute der Netzkomponenten NK1 bis NK8. Konfigurationsattribute sind dabei sämtliche veränderbaren Zustände dieser Netzkomponenten. Konfigurationsattribute sind so z.B.: "Welche Ein- oder Ausgänge sind aktiv?", "Welche virtuellen Verbindungen sind geschaltet?", "Welche Kommunikationsprotokolle werden verwendet?".

Die Kommunikationseinrichtung KOM2 ist für die Kommunikationsbeziehungen zu den Netzkomponenten NK1 bis NK8 verantwortlich. Die Kommunikation zu den Netzkomponenten NK1 und NK2 baut dabei auf einem Managementprotokoll MPA, zu den Netzkomponenten NK3, NK4 und NK5 auf einem Mangementprotokoll MPB und zu den Netzkomponenten NK6, NK7 und NK8 auf einem Managementprotokoll MPC auf. Es wäre auch möglich, daß eine andere Anzahl oder Art von Managementprotokollen für die Kommunikation mit den Netzkomponenten NK1 bis NK8 verwendet würde.

Die Kommunikationseinrichtung KOM1 ist für die Kommunikationsbeziehungen zu den anderen Netzwerkmanagementeinrichtungen NMEB und NMEC zuständig und stellt den Protokollbearbeitungseinrichtungen ZUST, ZUSTAE, STAT und MAIL entsprechende Datentransportdienste zur Verfügung.

Die Netzanschlußeinrichtung NAE steuert die physikalischen Verbindungswege, über die die Kommunikationseinrichtungen KOM1 und KOM2 Daten mit den Netzwerkmanagementeinrichtungen NMEA und NMEC bzw. mit den Netzkomponenten NK1 bis NK8 austauschen. Das Datennetz, über das der Datentransport zwischen den Netzwerkmanagementeinrichtungen NMEA, NMEB und NMEC abgewickelt wird, baut dabei auf bereits bestehenden Verbindungen zwischen den Kommunikationsnetzen KNA, KNB und KNC, die auch für andere Zwecke genutzt werden, auf.

Es wäre jedoch auch möglich, daß speziell für dieses Datennetz Verbindungswege geschaltet würden und es so ein eigenständiges, von den drei Kommunikationsnetzen KNA, KNB und KNC unabhängiges Kommunikationsnetz bilden würde.

Jeder der drei Netzwerkmanagementeinrichtungen NMEA, NMEB und NMEC ist eine Netzwerkmanagementadresse zugeordnet, über die die Daten für den Transport adressiert werden können.

Die Protokollbearbeitungseinrichtung ZUST hat zwei Funktionen. Einerseits kann sie von den Netzwerkmanagementeinrichtungen NMEB und NMEC Zustandsdaten von Netzkomponenten anfordern. Solche Zustandsdaten sind z.B. der Status einer Netzkomponente, Konfigurationsattribute oder CAD-Zeichnungen von Netzkomponenten. Sie wird hierzu zuerst von der Managementeinrichtung MANAG aufgefordert, diese Daten von einer der beiden Netzwerkmanagementeinrichtungen NMEB und NMEC anzufordern, fordert die Daten an und übermittelt sie anschließend der Managementeinrichtung MANAG.

Andererseits teilt sie den Netzwerkmanagementeinrichtungen NMEB und NMEC auf Anforderung Zustandsdaten über die Netzkomponenten NK1 bis NK8 mit. Diese Daten fordert sie dabei von der Managementeinrichtung MANAG an.

Die Protokollbearbeitungseinrichtung ZUSTAE übermittelt Zustandsänderungen der Netzkomponenten NK1 bis NK8 an andere Netzwerkmanagementeinrichtungen. Sie weist eine Steuereinrichtung CONTR1 und eine Speichereinrichtung auf, in der eine Registrierungsdatei RD1 abgelegt ist.

In der Registrierungsdatei RD1 sind zwei Listen angelegt. In beiden Listen kann jeder der Netzkomponenten NK1 bis NK8 eine beliebige Anzahl von Netzwerkmanagement-Adressen zugeordnet werden. In die erste Liste werden dabei die Adressen derjenigen Netzwerkmanagementeinrichtungen eingetragen, die über eine Statusänderung der Netzkomponenten NK1 bis NK8 unterrichtet werden sollen und in die zweite die Adressen derjenigen, die über eine Änderung der Konfigurationsattribute unterrichtet werden sollen.

Ändert sich nun der Status einer der Netzkomponenten NK1 bis NK8 oder wird vom Netzbetreiber ein Konfigurationsattribut eines dieser Netzkomponenten verändert, so überprüft die Steuereinrichtung CONTR1 die entsprechende Liste in der Registrierungsdatei RD1. Wird sie fündig, so informiert sie die entsprechenden Netzwerkmanagementeinrichtungen von der Zustandsänderung.

Die Eintragung der Netzwerkmanagement-Adressen in die Registrierungsdatei RD1 erfolgt dabei durch eine fremde Netzwerkmanagementeinrichtung, die die Steuereinrichtung CONTR1 anweist, ihre Netzwerkmanagement-Adresse in die erste oder die zweite Liste der Registrierungsdatei RD1 einzutragen.

Es ist auch möglich, daß das Eintragen der Netzwerkmanagement-Adressen in die Registrierungsdatei RD1 von dem Netzbetreiber A mittels der Managementeinrichtung MANAG und der Steuereinrichtung CONTR1 durchgeführt würde.

Eine weitere Funktion der Steuereinrichtung CONTR1 besteht darin, die eigene Netzwerkmanagement-Adresse auf Anordnung der Managementeinrichtung MANAG an eine bestimmte Stelle in die Registrierungsdatei einer der beiden Netzwerkmanagementeinrichtung NMEB und NMEC einzutragen und die in der Folge empfangenen Daten über Zustandsänderungen an die Managementeinrichtung MANAG weiterzuleiten.

Es ist auch möglich, daß die Registrierungsdatei RD1 eine andere Anzahl von Listen enthält oder die Listen für andere Zustandsänderungen zuständig sind.

Die Protokollbearbeitungseinrichtung STAT ist für die Übermittlung von Statistikdaten zuständig. Sie weist eine Steuereinrichtung CONTR2 und eine Speichereinrichtung auf, in der eine Registrierungsdatei RD2 abgelegt ist.

In der Registrierungsdatei RD2 ist eine Liste angelegt, in der jeder Netzkomponente NK1 bis NK8 eine beliebige Anzahl von Netzwerkmanagement-Adressen und damit korrespondierender Zeitintervalle und Arten der Statistik zugewiesen werden kann. Die Eintragungen in der Registrierungsdatei RD2 werden durch die Netzwerkmanagementeinrichtungen NMEB oder NMEC mittels der Steuereinrichtung CONTR2 vorgenommen.

Bei der Eintragung in die Registrierungsdatei RD2 wird von der Steuereinrichtung CONTR2 ein Statistikprozeß gestartet, der über die eingetragene Netzkomponente eine Statistik erstellt und diese nach Ablauf des korrespondierenden Zeitintervalls an die eingetragene Netzwerkmanagement-Adresse verschickt.

Die Protokollbearbeitungseinrichtung MAIL stellt dem Netzbetreiber A einen Dienst bereit, mit dem er unter der Oberfläche der Bedieneinrichtung BE direkt mit den Netzbetreibern B und C über eine 'elektronische Post' (z.B. Unix Mail) kommunizieren kann. Auch eine Sprachverbindung ist möglich.

Die Protokollbearbeitungseinrichtungen ZUST, ZUSTAE, STAT und MAIL sind nur beispielhaft dargestellt und sind nicht alle erforderlich. Sie könnten auch durch andere vergleichbare Einrichtungen ersetzt werden.

In dem anhand von Fig. 1 und Fig. 2 beschriebenen Beispiel wird die Anwendung des erfindungsgemäßen Verfahrens in einer Kommunikationsumgebung mit drei autonomen Kommunikationsnetzen verdeutlicht. Das Verfahren wäre jedoch auch für eine andere Anzahl von Kommunikationsnetzen anwendbar. Die Netzwerkmanagementeinrichtungen müssen auch nicht zwingend gleichartig aufgebaut sein.

In einem zweiten Beispiel wird eine Realisierung einer erfindungsgemäßen Netzwerkmanagementeinrichtung mittels Software aufgezeigt.

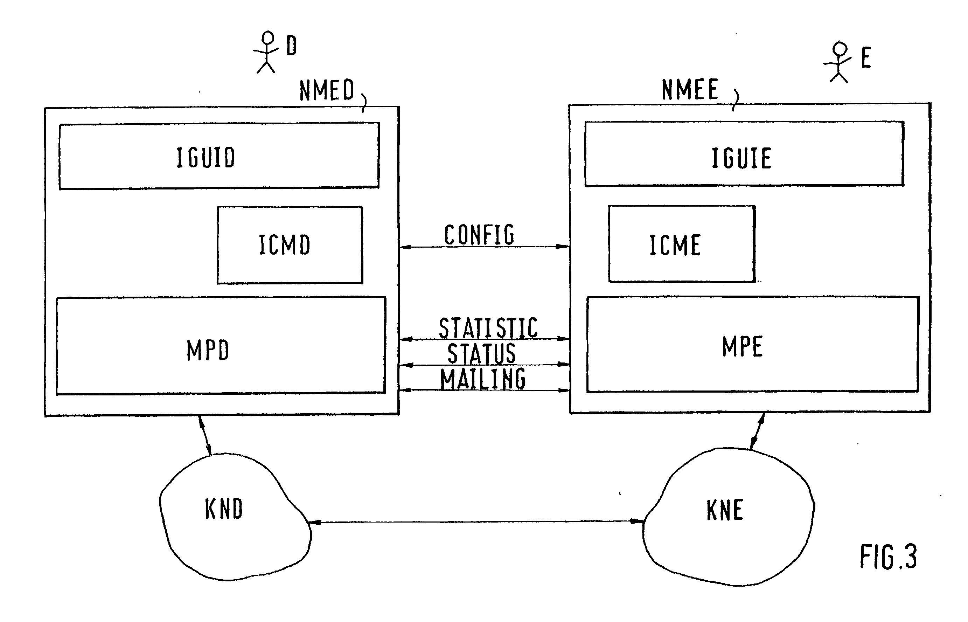

Fig. 3 zeigt zwei Kommunikationsnetze KND und KNE, zwei Netzwerkmanagementeinrichtungen NMED und NMEE und zwei Netzbetreiber D und E.

Bei den Kommunikationsnetzen KND und KNE handelt es sich um zwei autonome hybride Kommunikationsnetze, die miteinander gekoppelt sind. Die Netzbetreiber D und E verwalten die Kommunikationsnetze KND bzw. KNE mittels der Netzwerkmanagementeinrichtungen NMED bzw. NMEE eigenständig und autonom.

Die beiden Netzwerkmanagementeinrichtungen NMD und NME arbeiten mit den Programmen IGUID, ICMD und MPD bzw. IGUIE, ICME und MPE.

Beide Netzwerkmanagementeinrichtungen NMED und NMEE sind gleichartig aufgebaut. Die Netzwerkmanagementeinrichtung NMEE könnte aber auch wie im Beispiel nach Fig. 2 aufgebaut sein.

Im folgenden wird nun der Aufbau der Netzwerkmanagementeinrichtung NMED stellvertretend erläutert.

Die Funktionen der Netzwerkmanagementeinrichtung NMED werden von einem Rechner abgearbeitet, der mit entsprechenden peripheren Komponenten ausgestaltet ist. Es wäre jedoch auch möglich, die Funktionen der Netzwerkmanagementeinrichtung NMED auf mehrere, durch ein Datennetz verbundene Rechner zu verteilen.

Das Programm IGUID stellt dem Netzbetreiber mittels entsprechender Einund Ausgabeeinrichtungen eine graphische Benutzeroberfläche zur Verfügung. Bei diesem Programm könnte es sich zum Beispiel um das Softwaretool HP Open View Windows der Firma Hewlett-Packard handeln. Die beiden Programme MPD und ICMD sind für die eigentliche Verwaltung des Kommunikationsnetzes KND zuständig.

Das Programm MPD stellt dabei eine Managementplattform dar. Diese koordiniert sämtliche Netzwerkmanagementfunktionen der Netzwerkmanagementeinrichtung NMED und stellt alle grundliegenden Dienste, die z.B. die Kommunikation mit den Netzkomponenten ermöglichen, zur Verfügung. Solch eine Managementplattform könnte z.B. durch das Softwaretool HP OVME3.x der Firma Hewlett-Packard realisiert werden. Das Programm ICMD ist ein Programm für integriertes Konfigurationsmanagement, das auf die Dienste des Programms MPD aufbaut.

In das Programm MPD sind nun zusätzlich Dienste integriert, die einen Austausch von Daten mit Netzwerkmanagementeinrichtung NMEE über physikalische Verbindungswege der Kommunikationsnetze KND und KNE ermöglicht. Auf diesen Diensten aufbauend sind noch zusätzliche Dienste in das Programm MPD integriert, die einen Austausch von Statistik-Daten STATISTIC, Zustandsdaten STATUS, die den Status von Netzkomponenten betreffen und Kommunikationsdaten MAILING, für eine 'elektronische Post' steuern.

In das Programm ICMD wird ein zusätzlicher Dienst integriert, der den Austausch von Konfigurationsdaten CONFIG mittels der neuen Dienste des Programms MPD steuert.

Die Programme IGUID, MPD und ICMD wirken nun so zusammen, daß der Netzbetreiber D unter derselben graphischen Oberfläche sowohl Daten über sein eigenes Kommunikationsnetz KND als auch solche über das fremde Kommunikationsnetz KNE abrufen kann. Er kann sich so eine graphische Darstellung, die beide Kommunikationsnetze KND und KNE zeigt, erstellen lassen. Ein aktives Einwirken auf die einzelnen Netzkomponenten ist jedoch nur auf diejenigen Netzkomponenten, die sich in seinem eigenen Kommunikationsnetz KND befinden, möglich. Die Programme nach Fig. 3 erfüllen dabei die selben Funktionen wie die Vorrichtungen nach Fig. 2.

## Patentansprüche

1. Verfahren zur Unterstützung des Netzwerkmanagements eines Kommunikationsnetzes (KNA, KNB, KNC; KND, KNE) in einer Kommunikationsumgebung, in der mehrere Kommunikationsnetze (KNA, KNB, KNC; KND, KNE) derart miteinander gekoppelt sind, daß zwischen ihnen ein Austausch von Daten möglich ist, und in der jedes Kommunikationsnetz (KNA, KNB, KNC; KND, KNE) jeweils mittels einer eigenen, autonomen Netzwerkmanagementeinrichtung (NMEA, NMEB, NMEC; NMED, NMEE) derart verwaltet wird, daß es nur dem jeweiligen Netzbetreiber des jeweiligen Kommunikationsnetzes (KNA, KNB, KNC; KND, KNE) mittels der eigenen, autonomen Netzwerkmanagementeinrichtung (NMEA, NMEB, NMEC; NMED, NMEE) möglich ist, aktiv auf das jeweilige Kommunikationsnetz (KNA, KNB, KNC; KND, KNE) einzuwirken,
**dadurch gekennzeichnet, daß** sich die autonomen Netzwerkmanagementeinrichtungen (NMEA, NMEB, NMEC; NMEP, NMEE) über ein Datennetz untereinander Daten über den Zustand der von ihnen verwalteten Kommunikationsnetze (KNA, KNB, KNC; KND, KNE) zusenden und daß solche von einer anderen autonomen Netzwerkmanagementeinrichtungen (NMEA, NMEB, NMEC; NMEP, NMEE) empfangenen Daten über den Zustand dieses anderen Kommunikationsnetzes (KNA, KNB, KNC; KND, KNE) von der autonomen Netzwerkmanagementeinrichtung (NMEA, NMEB, NMEC; NMED, NMEE), die diese Daten empfangen hat, mittels einer Ausgabeeinrichtung (AUSE, IGUID) dem jeweiligen Netzbetreiber (A, B, C; D, E) der autonomen Netzwerkmanagementeinrichtung (NMEA, NMEB, NMEC; NMED, NMEE) über eine graphische Oberfläche zur Verfügung gestellt werden.

2. Verfahren nach Anspruch 1,
**dadurch gekennzeichnet, daß** Daten über den Zustand eines Kommunikationsnetzes von Konfigurationsdaten und/oder Zustandsdaten von Netzelementen des Kommunikationsnetzes gebildet werden.

3. Verfahren nach Anspruch 1,
**dadurch gekennzeichnet, daß** das Datennetz physikalische Verbindungen der Kommunikationsnetze (KNE, KNB, KNC; KND, KNE) benutzt.

4. Verfahren nach Anspruch 1,
**dadurch gekennzeichnet, daß** in jeder autonomen Netzwerkmanagementeinrichtung (NMEA, NMEB, NMEC) in einer Registrierungsdatei (RD1) für jede Netzkomponente (NK1 bis NK8) eine Anzahl von fremden autonomen Netzwerkmanagementeinrichtungen (NMEB, NMEC) eingetragen ist, daß jede Zustandsänderung einer Netzkomponente (NK1 bis NK8) erfaßt wird, und daß bei einer erkannten Zustandsänderung einer Netzkomponente (NK1 bis NK8), die in der Registrierungsdatei (RD1) dieser Netzkomponente zugeordneten Netzwerkmanagementeinrichtungen über die Zustandsänderung informiert werden.

5. Verfahren nach Anspruch 4,
**dadurch gekennzeichnet, daß** die Daten in der Registrierungsdatei (RD1) mittels einer Eingabeeinrichtung (EINE) erzeugt und verändert werden.

6. Verfahren nach Anspruch 4,
**dadurch gekennzeichnet, daß** die Eintragungen in die Registrierungsdatei (RD1) von einer fremden autonomen Netzwerkmanagementeinrichtung (NMEB, NMEC) über das Datennetz veranlaßt werden.

7. Verfahren nach Anspruch 1,
**dadurch gekennzeichnet, daß** von einer autonomen Netzwerkmanagementeinrichtung (NMED, NMEE) die empfangenen Daten über den Zustand anderer Kommunikationsnetze (CONFIG, STATUS) derart aufbereitet werden, daß sie von dem zuständigen Netzwerkbetreiber in einer graphischen Darstellung unter derselben Benutzeroberfläche, unter der auch das eigene Kommunikationsnetz (KND, KNE) verwaltet wird, abgerufen werden können.

8. Netzwerkmanagementeinrichtung (NMEA, NMEB, NMEC; NMED, NMEE) zum autonomen und eigenständigen Verwalten eines aus mehreren Netzkomponenten (NK1 bis NK8) bestehenden Kommunikationsnetzes (KNA, KNB, KNC; KND, KNE) durch den Netzbetreiber des Kommunikationsnetzes (KNA, KNB, KNC; KND, KNE), wobei die Netzwerkmanagementeinrichtung (NMEA, NMEB, NMEC; NMED, NMEE) mit einer Bedieneinrichtung (BE; IGUID, IGUIE) zur Kommunikation mit dem Netzbetreiber (A, B, C; D, E) des Kommunikationsnetzes (KNA, KNB, KNC; KND, KNE) mittels mindestens einer Eingabeeinrichtung (EINE) und mindestens einer Ausgabeeinrichtung (AUSE) versehen ist, und die Netzwerkmanagementeinrichtung (NMEA, NMEB, NMEC; NMED, NMEE) mit einer Steuereinrichtung (SE; ICMD + MPD, ICME + MPE) versehen ist, die mit einer ersten Kommunikationseinrichtung (KOM2) zum Austausch von Managementdaten mit den Netzkomponenten (NK1 bis NK8) des Kommunikationsnetzes (KNA, KNB, KNC; KND, KNE) versehen ist und die so ausgestaltet ist, daß sie alle Netzkomponenten (NK1 bis NK8) des Kommunikationsnetzes (KNA, KNB, KNC; KND, KNE) derart eigenständig verwaltet, daß es nur dem Netzbetreiber des Kommunikationsnetzes mittels der Netzwerkmanagementeinrichtung (NMEA, NMEB, NMEC; NMED, NMEE) möglich ist, aktiv auf das Kommunikationsnetz (KNA, KNB, KNC; KND, KNE) einzuwirken,
**dadurch gekennzeichnet, daß** die Steuereinrichtung (SE; ICMD + MPD, ICME + MPE) mit einer zweiten Kommunikationseinrichtung (KOM1) zum Austausch von Daten mit fremden autonomen Netzwerkmanagementeinrichtungen (MMEB, NMEC; NMEE, NMED) versehen ist, daß die Steuereinrichtung (SE, ICMD + MPD, ICME + MPE) so ausgestaltet ist, daß sie mittels der zweiten Kommunikationseinrichtung (KOM1) von einer anderen autonomen Netzwerkmanagementeinrichtungen (NMEA, NMEB, NMEC; NMEP, NMEE), die ein anderes Kommunikationsnetz derart verwaltet, daß es nur dem Netzbetreiber dieses anderen Kommunikationsnetzes mittels der eigenen, autonomen Netzwerkmanagementeinrichtung (NMEA, NMEB, NMEC; NMED, NMEE) möglich ist, aktiv auf das Kommunikationsnetz einzuwirken, Daten über den Zustand dieses anderen Kommunikationsnetze (KNA, KNB, KNC; KND, KNE) empfängt und daß die Steuereinrichtung (SE, ICMD + MPD, ICME + MPE) weiter so ausgestaltet ist, daß sie diese empfangenen Daten über den Zustand dieses anderen Kommunikationsnetzes mittels der Bedieneinrichtung (BE; IGUID, IG, UIE) dem Netzbetreiber (A, B, C; D, E) des eigenen Kommunikationsnetzes (KNA, KNB, KNC; KND, KNE) über eine graphische Oberfläche zur Verfügung stellt.

9. Netzwerkmanagementeinrichtung (NMEA, NMEB, NMEC, NMED, NMEE) nach Anspruch 8, **dadurch gekennzeichnet, daß** sie aus mehreren räumlich verteilten und mittels eines Datennetzes gekoppelten Einheiten besteht.

10. Netzwerkmanagementeinrichtung (NMEA, NMEB, NMEC, NMED, NMEE) nach Anspruch 8, **dadurch gekennzeichnet, daß** sie aus mehreren hierarchisch gegliederten Teilnetzwerkmanagementeinrichtungen besteht.

## Claims

1. Method for supporting the network management of a communications network (KNA, KNB, KNC; KND, KNE) in a communications environment in which several communications networks (KNA, KNB, KNC; KND, KNE) are linked to one another in such a way that an exchange of data is possible between them, and in which each communications network (KNA, KNB, KNC; KND, KNE) is respectively managed by means of its own, autonomous network management facility (NMEA, NMEB, NMEC; NMED, NMEE) in such a way that the respective communications network (KNA, KNB, KNC; KND, KNE) can be actively influenced only by the respective network operator of the respective communications network (KNA, KNB, KNC; KND, KNE) by means of its own, autonomous network management facility (NMEA, NMEB, NMEC; NMED, NMEE), **characterized in that** the autonomous network management facilities (NMEA, NMEB, NMEC; NMED, NMEE) send to each other, through a data network, data concerning the status of the communications networks (KNA, KNB, KNC; KND, KNE) managed by them, and such data, received from another autonomous network management facility (NMEA, NMEB, NMEC; NMED, NMEE), concerning the status of this other communications network (KNA, KNB, KNC; KND, KNE) is made available by means of an output facility (AUSE, IGUID), via a graphical interface, to the respective network operator (A, B, C; D, E) of the autonomous network management facility (NMEA, NMEB, NMEC; NMED, NMEE) by the autonomous network management facility (NMEA, NMEB, NMEC; NMED, NMEE) which has received this data.

2. Method according to Claim 1, **characterized in that** the data concerning the status of a communications network is formed by configuration data and/or status data of network elements of the communications network.

3. Method according to Claim 1, **characterized in that** the data network uses physical connections of the communications networks (KNA, KNB, KNC; KND, KNE).

4. Method according to Claim 1, **characterized in that**, in each autonomous network management facility (NMEA, NMEB, NMEC), a number of external, autonomous network management facilities (NMEB, NMEC) is entered in a recording file (RD1) for each network component (NK1 to NK8), each change in status of a network component (NK1 to NK8) is recorded and, if a change in status of a network component (NK1 to NK8) is detected, the network management facilities assigned in the recording file (RD1) of this network component are informed of the change in status.

5. Method according to Claim 4, **characterized in that** the data in the recording file (RD1) is generated and altered by means of an input facility (EINE).

6. Method according to Claim 4, **characterized in that** the entries into the recording file (RD1) are initiated by an external, autonomous network management facility (NMEB, NMEC) through the data network.

7. Method according to Claim 1, **characterized in that** the received data concerning the status of other communication networks (CONFIG, STATUS) is conditioned by an autonomous network management facility (NMED, NMEE) in such a way as to be retrievable by the respective network operator in a graphical representation via the same user interface via which the network operator's own communications network (KND, KNE) is also managed.

8. Network management facility (NMEA, NMEB, NMEC; NMED, NMEE) for the autonomous and independent management of a communications network (KNA, KNB, KNC; KND, KNE), consisting of several network components (NK1 to MK8), by the network operator of the communications network (KNA, KNB, KNC; KND, KNE), the network management facility (NMEA, NMEB, NMEC; NMED, NMEE) being provided with an operating facility (BE; IGUID, IGUIE) for communication with the network operator (A, B, C; D, E) of the communication network (KNA, KNB, KNC; KND, KNE) by means of at least one input facility (EINE) and at least one output facility (AUSE), and the network management facility (NMEA, NMEB, NMEC; NMED, NMEE) being provided with a control facility (SE; ICMD + MPD, ICME + MPE) which is provided with a first communication facility (KOM2) for exchanging management data with the network components (NK1 to NK8) of the communications network (KNA, KNB, KNC; KND, KNE) and which is designed to independently manage all network components (NK1 to NK8) of the communications network (KNA, KNB, KNC; KND, KNE) in such a way that the communications network (KNA, KNB, KNC; KND, KNE) can be actively influenced only by the network operator of the communications network by means of the network management facility (NMEA, NMEB, NMEC; NMED, NMEE), **characterized in that** the control facility (SE; ICMD + MPD, ICME + MPE) is provided with a second communications facility (KOM1) for exchanging data with external, autonomous network management facilities (NMEB, NMEC; NMEE, NMED), the control facility (SE; ICMD + MPD, ICME + MPE) is designed in such a way that, by means of the second communications facility (KOM1), it receives from another autonomous network management facility (NMEA, NMEB, NMEC; NMED, NMEE), which manages another communications network in such a way that the communications network can be actively influenced only by the network operator of this other communications network by means of its own, autonomous network management facility (NMEA, NMEB, NMEC; NMED, NMEE), data concerning the status of this other communication network (KNA, KNB, KNC; KND, KNE) and the control facility (SE, ICMD + MPD, ICME + MPE) is further so designed that, by means of the operating facility (BE; IGUID, IG, UIE), via a graphical interface, it makes this received data concerning the status of this other communications network available to the network operator (A, B, C; D, E) of its own communication network (KNA, KNB, KNC; KND, KNE),

9. Network management facility (NMEA, NMEB, NMEC, NMED, NMEE) according to Claim 8, **characterized in that** it consists of several spatially distributed units linked by means of a data network.

10. Network management facility (NMEA, NMEB, NMEC, NMED, NMEE) according to Claim 8, **characterized in that** it consists of several hierarchically structured partial network management facilities.

## Revendications

1. Procédé de support du management de réseau d'un réseau de communication (KNA, KNB, KNC, KND, KNE) dans un environnement de communication, dans lequel plusieurs réseaux de communication (KNA, KNB, KNC, KND, KNE) sont couplés les uns avec les autres pour qu'entre eux un échange de données soit possible et dans lequel chaque réseau de communication (KNA, KNB, KNC, KND, KNE) soit géré selon le cas au moyen d'un appareil de management de réseau autonome et propre (NMEA, NMEB, NMEC, NMED, NMEE) de telle manière qu'il n'est possible qu'à l'exploitant de réseau respectif du réseau de communication respectif (KNA, KNB, KNC, KND, KNE) au moyen d'un appareil de management de réseau propre et autonome (NMEA, NMEB, NMEC, NMED, NMEE) d'agir activement sur le réseau de communication respectif (KNA, KNB, KNC, KND, KNE), **caractérisé en ce que** les appareils de management de réseau autonomes (NMEA, NMEB, NMEC, NMED, NMEE) s'envoient entre eux sur un réseau de données des données sur l'état des réseaux de communication gérés par eux (KNA, KNB, KNC, KND, KNE) et que de telles données reçues par un des autres appareils de management de réseau autonomes (NMEA, NMEB, NMEC, NMED, NMEE) sur l'état de cet autre réseau de communication (KNA, KNB, KNC, KND, KNE) par les appareils de management de réseau autonomes (NMEA, NMEB, NMEC, NMED, NMEE) qui ont reçu ces données, au moyen d'un dispositif de sortie (AUSE, GUID) sont mises à la disposition de l'exploitant du réseau respectif (A, B, C, D, E) des appareils de management de réseau autonomes (NMEA, NMEB, NMEC, NMED, NMEE) sur une interface graphique.

2. Procédé selon la revendication 1, **caractérisé en ce que** les données sur l'état d'un réseau de communication sont formées par des données de configuration et/ ou des données d'état des éléments du réseau du réseau de communication.

3. Procédé selon la revendication 1, **caractérisé en ce que** le réseau de données utilise des liaisons physiques des réseaux de communication (KNA, KNB, KNC, KND, KNE).

4. Procédé selon la revendication 1, **caractérisé en ce qu'**un nombre d'appareils de management de réseau autonomes étrangers (NMEB, NMEC).soit inséré dans chacun des appareils de management de réseau autonomes (NMEA, NMEB, NMEC) dans un fichier d'enregistrement (RD1) pour chaque composante du réseau (NK1 jusqu'à NK8),que chaque changement d'état d'une composante de réseau (NK1 jusqu'à NK8) soit saisi et que lors d'un changement d'état reconnu d'une composante de réseau (NK1 jusqu'à NK8), qui sont informés sur le changement d'état dans un fichier d'enregistrement (RD1) de ces appareils de management de réseau attribués aux composantes de réseau.

5. Procédé selon la revendication 4, **caractérisé en ce que** les données sont réalisées et changées dans le fichier d'enregistrement (RD1) au moyen d'un dispositif d'entrée (EINE).

6. Procédé selon la revendication 4, **caractérisé en ce que** les insertions dans le fichier d'enregistrement (RD1) sont provoquées par un appareil de management de réseau autonome étranger (NMEB, NMEC) sur le réseau de données.

7. Procédé selon la revendication 1, **caractérisé en ce que** les données reçues sur l'état d'autres réseaux de communication (CONFIG, STATUS) sont traitées par un appareil de management de réseau (NMED, NMEE) de telle manière qu'elles peuvent être appelées par l'exploitant du réseau qualifié dans une représentation graphique sous la même interface utilisateur, sous laquelle est géré le réseau de données propre (KND, KNE).

8. Appareil de management de réseau (NMEA, NMEB, NMEC, NMED, NMEE) pour la gestion autonome et indépendante d'un réseau de communication (KNA, KNB, KNC, KND, KNE) provenant de plusieurs composantes du réseau (NK1 jusqu'à NK8), moyennant quoi l'appareil de management de réseau (NMEA, NMEB, NMEC, NMED, NMEE) est pourvu d'un dispositif de commande (BE, IGUID, IGUIE) pour la communication avec l'exploitant du réseau (A, B, C ; D, E) du réseau de communication (KNA, KNB, KNC, KND, KNE) au moyen au moins d'un dispositif d'entrée (EINE) et au moins d'un dispositif de sortie (AUSE) et l'appareil de management de réseau (NMEA, NMEB, NMEC, NMED, NMEE) est pourvu d'un appareil de commande (SE, ICMD+MPD, ICME+MPE), qui est pourvu d'un premier dispositif de communication (KOM2) pour l'échange de données de management avec les composantes du réseau (NK1 jusqu'à NK8) du réseau de communication (KNA, KNB, KNC, KND, KNE) et qui est agencé de façon à ce qu'il gère indépendamment toutes les composantes du réseau (NK1 jusqu'à NK8) du réseau de communication (KNA, KNB, KNC, KND, KNE) de telle manière qu'il est possible seulement pour l'exploitant de réseau du réseau de communication d'agir activement sure le réseau de communication (KNA, KNB, KNC, KND, KNE) au moyen d'appareils de management de réseau (NMEA, NMEB, NMEC, NMED, NMEE), **caractérisé en ce que** l'appareil de commande (SE ; ICMD+MPD, ICME+MPE) est pourvu d'un deuxième dispositif de communication (KOM1) pour l'échange de données avec des appareils de management de réseau autonomes et étrangers (NMEB, NMEC, NMEE, NMED), **en ce que** l'appareil de commande (SE, ICMD+MPD, ICME+MPE) est agencé de telle sorte qu'il reçoive des données sur l'état de cet autre réseau de communication (KNA, KNB, KNC, KND, KNE) au moyen du deuxième dispositif de communication (KOM1) d'un autre appareil de management de réseau autonome (NMEA, NMEB, NMEC, NMED, NMEE), qui gère un autre réseau de communication de telle manière qu'il soit possible seulement à l'exploitant réseau de cet autre réseau de communication d'agir activement sur le réseau de communication au moyen de l'appareil de management de réseau propre, autonome (NMEA, NMEB, NMEC, NMED, NMEE), et **en ce qu'**il met ces données reçues sur l'état de cet autre réseau de communication à la disposition de l'exploitant du réseau (A, B, C, D, E) du réseau de communication propre (KNA, KNB, KNC, KND, KNE) sur une interface graphique au moyen du dispositif de commande (BE, IGUID, IGUIE).

9. Appareil de management de réseau (NMEA, NMEB, NMEC, NMED, NMEE) selon la revendication 8, **caractérisé en ce qu'**il se compose de plusieurs unités partagées dans l'espace et couplées au moyen d'un réseau de données.

10. Appareil de management de réseau (NMEA, NMEB, NMEC, NMED, NMEE) selon la revendication 8, **caractérisé en ce qu'**il se compose de plusieurs appareils de management de sous-réseau articulés de manière hiérarchique.
